# EUROPEAN PATENT APPLICATION

(11) **EP 0 632 600 A2**
(43) Date of publication of application: **04.01.1995**
(21) Application number: 94104168.3
(22) Date of filing: 17.03.1994
(51) Int. Cl.: H04B 1/26

(54) **Radio receiver circuit**

(30) Priority: 30.06.1993 GB 9313466
(71) Applicant: MOTOROLA, INC., Schaumburg, IL 60196 (US)
(72) Inventor: Gay, Michael, Coppet, Vaud 1296 (CH)
(74) Representative: Hirsz, Christopher Stanislaw

(57) **Abstract**

A radio receiver circuit particularly suitable for use in applications such as remote control, includes a SAW filter (106) as the sole frequency sensitive element which bandpass-filters a received high-frequency signal. This bandpass-filtered signal is multiplied with a signal from an oscillator (112) at a frequency which is greater than half the bandwidth of the filter. Thus, the energy of the high-frequency signal is dispersed into sidebands about the filter's centre frequency which lie outside the filter's passband, so that sensitivity to undesired coupling of the multiplied signal through the filter is decreased. The circuitry apart from the SAW filter may be fabricated as a single integrated circuit (118) requiring the minimum of external components.

## Description

### Background of the Invention

This invention relates to radio receiver circuits and particularly, though not exclusively, to simple high-frequency radio receiver circuits such as may be used in remote control applications.

In applications such as remote control, there is a need for simple high-frequency radio receiver circuits. To minimise the size and cost, it is preferable that such a receiver be produced as an integrated circuit with a minimum of external components. The development in recent years of high-frequency surface acoustic wave (SAW) filters allows the necessary selectivity to be obtained from such a filter operating at the signal frequency. A simple receiver could therefore employ such a filter as the sole frequency selective element, with an integrated circuit providing gain, demodulation and subsequent processing operations on the demodulated signal.

However, the difficulty in implementing such a receiver is that the gain required from the receiver input to the demodulator may be very high, and undesired coupling from the demodulator drive circuits to the input may cause instability.

There is therefore a need for a receiver which can employ a SAW filter as the frequency selective element, and which has reduced sensitivity to undesired coupling from the high signal level circuits to the input.

### Summary of the Invention

In accordance the present invention there is provided a radio receiver circuit comprising:
filter means coupled to receive an input signal having a first frequency and having a predetermined passband bandwidth so as to pass a filtered signal having only a predetermined band of frequencies centred on the first frequency;
oscillator means for providing an oscillator signal at a second frequency which is greater than half the bandwidth of the filter means;
multiplier means coupled to receive the filtered signal from the filter means and the oscillator signal from the oscillator means and for producing a multiplied signal therefrom; and
demodulator means coupled to receive the multiplied signal and to demodulate therefrom desired information,
whereby the multiplied signal has components whose frequencies which lie outside the passband of the filter means such that sensitivity to undesired coupling of the multiplied signal through the filter means is decreased.

It will be understood that such a circuit may utilise a SAW as the filter means for the sole frequency selective element, the remaining circuitry being fabricated as a single integrated circuit requiring the minimum of external components.

### Brief Description of the Drawings

One radio receiver circuit in accordance with the present invention will now be described, by way of example only, with reference to the accompanying drawing, in which:

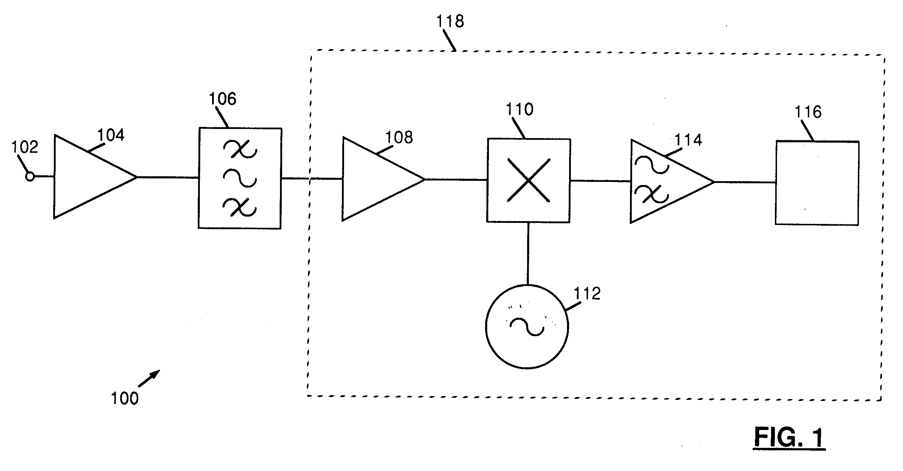

FIG. 1 shows a block-schematic circuit diagram of the radio receiver circuit.

### Description of the Preferred Embodiment

Referring now to FIG. 1, a radio receiver circuit 100 suitable for use in applications such as remote control has an input terminal 102 for receiving a signal at an RF frequency. The input terminal 102 is connected, via an amplifier 104, to a SAW bandpass filter 106 whose passband is centred on a particular desired frequency and whose bandwidth (as will be explained in greater detail below) is known.

The output of the SAW filter 106 is connected, via a further amplifier 108, to one input of a multiplier 110. Another input of the multiplier 110 is connected to the output of an oscillator 112 which produces (as will be explained in greater detail below) a signal at a much lower frequency than that received at the input terminal 102. The output of the multiplier 110 is connected via a high-pass filtering amplifier 114 to the input of a conventional demodulator 116.

All of the components downstream of the SAW filter 106 are fabricated as a single integrated circuit 118.

In use of the circuit 100 an RF signal is received at an antenna (not shown) and is applied to the input terminal 102. The RF signal received at the input terminal 102 is typically at a low level, and if desired may be amplified by the amplifier 104. The signal output from the amplifier 104 is applied to the SAW filter 106. The SAW filter 106 is chosen to have a passband centred on a particular known frequency of interest (for example, that transmitted by a matching remote control transmitter - not shown), and has a known passband. In one practical implementation of the circuit 100, the SAW filter 106 is chosen to have a passband with a bandwidth of approximately 1MHz which is centred upon a frequency of approximately 400MHz.

The oscillator 112 is designed to produce a pulsed output signal which alternates between values having the same magnitude and opposite polarity. The periods of each of the alternate values of the oscillator output are the same, so that the average value of the oscillator signal is zero. The oscillation frequency of the oscillator 112 is chosen (as will be explained in greater detail below) to be greater than half the bandwidth of the SAW filter 106 and to be substantially less than the centre frequency of the SAW filter 106. In the same practical implementation of the circuit 100 as referred to above, the frequency of the oscillator 112 is chosen to be approximately 2MHz.

The bandpass-filtered output signal from the SAW filter 106 is multiplied with the output signal from the oscillator 112 to produce, it will be understood, a multiplied signal having two components: one component at a frequency which is sum of the frequencies of the two signals at the inputs of the multiplier 110, and another component at a frequency which is the difference between the frequencies of the two signals at the inputs of the multiplier 110. Thus, in the same practical implementation of the circuit 100 as referred to above, the two components of the multiplied signal produced at the output of the multiplier 110 have frequencies of 402MHz (= 400MHz + 2MHz) and 398MHz (= 400MHz - 2MHz).

The multiplied signal produced at the output of the multiplier 110 is amplified by the amplifier 114, and is applied as a high-level signal to the demodulator 116. The demodulator operates in conventional manner to demodulate the high-level, high-frequency signal so as to recover desired information therefrom. In order to prevent the oscillator 112 from feeding energy into the demodulator 116, a high-pass filter is built into the amplifier 114 so as to block any direct feedthrough of low-frequency energy from the oscillator.

It will be understood that by multiplying the high-frequency bandpass-filtered signal with the periodically inverting signal from the oscillator 112 as described above, the energy of the high-frequency signal is dispersed into sidebands about the original frequency. It will further be understood that by ensuring that the inversion frequency is sufficiently high, these sidebands are made to lie outside the passband of the filter 104. Thus, if the multiplied signal produced at the output of the multiplier 110 should be coupled to the input terminal 102, the coupled signal will not cause malfunction of the circuit because it will not be passed by the SAW filter 106 since its two components have frequencies (398MHz and 402MHz) which lie outside the filter's passband (from 399MHz to 401MHz). Thus, the circuit 100 exhibits greatly decreased sensitivity to undesired coupling of high level signals back to the circuit's input.

As referred to above, the frequency of the oscillator 112 must be chosen to be greater than half the bandwidth of the SAW filter 106 in order for the sidebands to lie outside the filter's passband. In practice the oscillator frequency should also be sufficiently low that the periods of alternate polarity of the oscillator signal are well-matched in order to minimise the residual energy at the filter's centre frequency in the multiplier's output.

Thus, it will be appreciated that all of the components of the radio receiver circuit 100 (except for the SAW filter 106 and the input amplifier 104) can be reduced into the single integrated circuit 118, enabling the radio receiver circuit 100 to be provided simply and cheaply, with the minimum of external components, while offering greatly increased tolerance of undesired coupling of high-level signals to the circuit's input.

It will also be appreciated that, if desired, further circuitry for processing the information recovered by the demodulator could also be integrated into the same single integrated circuit, thereby further decreasing the total number of components required in a particular application, and so decreasing the cost.

It will be appreciated that various other modifications or alternatives to the above described embodiment will be apparent to a person skilled in the art without departing from the inventive concept.

## Claims

1. A radio receiver circuit comprising:
filter means coupled to receive an input signal having a first frequency and having a predetermined passband bandwidth so as to pass a filtered signal having only a predetermined band of frequencies centred on the first frequency;
oscillator means for providing an oscillator-signal at a second frequency which is greater than half the bandwidth of the filter means;
multiplier means coupled to receive the filtered signal from the filter means and the oscillator signal from the oscillator means and for producing a multiplied signal therefrom; and
demodulator means coupled to receive the multiplied signal and to demodulate therefrom desired information,
whereby the multiplied signal has components whose frequencies which lie outside the passband of the filter means such that sensitivity to undesired coupling of the multiplied signal through the filter means is decreased.

2. A radio receiver circuit according to claim 1 further comprising first amplifier means coupled between the filter means and the multiplier means.

3. A radio receiver circuit according to claim 1 or 2 further comprising second amplifier means coupled between the multiplier means and the demodulator means.

4. A radio receiver circuit according to any preceding claim further comprising high pass filter means coupled between the multiplier means and the demodulator means for preventing any component of the oscillator signal from reaching the demodulator means.

5. A radio receiver circuit according to any preceding claim wherein the oscillator signal is arranged to alternate between values of substantially equal magnitude and opposite polarity during substantially equal periods such that multiplied signal alternates between a signal corresponding to the filtered signal and its inverse during the periods.

6. A radio receiver circuit according to any preceding claim wherein the filter means comprises a surface acoustic wave filter.

7. A radio receiver circuit according to any preceding claim wherein the second frequency is substantially less than the first frequency.

8. A circuit for use with filter means coupled to receive an input signal having a first frequency and having a predetermined passband bandwidth so as to pass a filtered signal having only a predetermined band of frequencies centred on the first frequency, the circuit comprising:
oscillator means for providing an oscillator signal at a second frequency which is greater than half the bandwidth of the filter means;
multiplier means for receiving the filtered signal from the filter means and the oscillator signal from the oscillator means and for producing a multiplied signal therefrom; and
demodulator means coupled to receive the multiplied signal and to demodulate therefrom desired information,
whereby the multiplied signal has components whose frequencies which lie outside the passband of the filter means such that sensitivity to undesired coupling of the multiplied signal through the filter means is decreased.

9. A circuit according to claim 8 fabricated in a single integrated circuit.
